# EUROPEAN PATENT APPLICATION

(11) **EP 4 230 379 A2**
(43) Date of publication of application: **23.08.2023**
(21) Application number: 23153639.2
(22) Date of filing: 27.01.2023
(51) Int. Cl.: B29C 45/14, C08L 83/04, B29C 45/00, C08J 5/18, B65D 43/02, B65D 45/20

(54) **TWO-COMPONENT PLATINUM CONTENTED LIQUID SILICONE AND THE METHOD FOR MANUFACTURING OF STORAGE BOX LID**

(30) Priority: 31.01.2022 HK 32022047549
(71) Applicant: Hon, Kam Yuen Dennis, Hong Kong (HK)
(72) Inventor: Hon, Kam Yuen Dennis, Hong Kong (HK)
(74) Representative: Klunker IP Patentanwälte PartG mbB

(57) **Abstract**

The present application provides a storage box lid, a storage box and a method for manufacturing the same. The storage box lid comprises a flexible thin film and a plastic rigid frame. The flexible thin film is prepared from the two-component platinum contented liquid silicone.The preparation method of the storage box lid comprises the following steps: S1. Transfer the Primer to the plastic rigid frame at room temperature in a clean room; S2. Curing the Primer at a temperature of 120°C to 150°C for 15 minutes to 20 minutes; S3. Heating the mold to 125-145°C; S4. Put the plastic rigid frame with Primer transferred into the mold cavity and position it, and then close the mold; S5. Inject two-component platinum contented liquid silicone into the mold cavity, cure for 150s to 200s, and form a flexible thin film in the plastic rigid frame; S6. Open the mold to obtain the storage box lid.. In the present invention, the storage box formed by using the storage box lid with the flexible thin film in combination with a matching box body can significantly improve the capacity for storing food, so that it can effectively store food larger than the box body. Moreover, the storage box of the present invention does not significantly squeeze the stored food, and the effect is distinctive.

## Description

### TECHNICAL FIELD OF THE INVENTION

The present application relates to the technical field of storage boxes, in particular to a storage box lid, a storage box and a method for manufacturing the same.

### BACKGROUND OF THE INVENTION

In the real world, the average family will use a sealing box made of rigid plastics or glass materials to store food, and use plastic wrap to preserve food to achieve fresh-keeping effect. In order to meet the needs of life, families generally store storage boxes of different sizes to meet the storage needs of food of different sizes and volumes. However, the existing storage boxes generally use rigid materials to manufacture box bodies and lids, which leads to the fixed size, and there is a problem of small actual storage capacity when storing food. And containing slightly more food would easily squash soft foods (e.g. fruits such as durian or grapes) or squash fragile foods (e.g. biscuits). However, if disposable plastic wrap is used for packaging and storage, it cannot be washed or reused since it is one-off, there are environmental issues.

Therefore, there is an urgent need for a storage box that is environmentally friendly and can maximize the storage volume without squeezing the stored items.

### BRIEF DESCRIPTION OF THE TECHNOLOGY

In order to solve or at least partially solve the above technical problems, the present application provides a storage box lid, a method for manufacturing the same and a storage box manufactured thereby.

The present invention is realized by the following technical solutions:
In a first aspect, the present invention provides a two-component platinum contented liquid silicone for preparing a storage box lid, comprising a component A and a component B, the content of component A are 100% by weight, the following components by weight:

| | |
|---|---|
| Vinyl Terminated Polydimethylsiloxane | 60-78%, |
| Silicone Dioxide | 18-38%, |
| Platinum(0)-1,3-divinyl-1,1,3,3-tetramethyldisiloxane | 2-4%; |

the content of component B are 100% by weight, the following components by weight:

| | |
|---|---|
| Vinyl Terminated Polydimethylsiloxane | 60-78%, |
| Silicone Dioxide | 18-38%, |
| Dimethyhydrogensiloxane | 2-4%. |

Preferably, the mass ratio of the component A and the component B is 1:1 to 1.08:1, more preferably1.0:1-1.05:1.

In a second aspect, the present invention provides a method for preparing a storage box lid, wherein the storage box lid includes a flexible thin film and a plastic rigid frame, and the flexible thin film is prepared from the aforementioned two-component platinum contented liquid silicone;

The preparation method of the storage box lid comprises the following steps:
S1. Transfer the Primer to the plastic rigid frame at room temperature in a clean room;
S2. Curing the Primer at a temperature of 120°C to 150°C for 15 minutes to 20 minutes;
S3. Heating the mold to 125-145 ° C;
S4. Put the plastic rigid frame with primer into the mold cavity and position it, and then close the mold;
S5. Inject two-component platinum contented liquid silicone into the mold cavity, cure for 150s to 200s, and form a flexible thin film in the plastic rigid frame; the two-component platinum contented liquid silicone is formed by mixing component A and component B in a certain proportion;
S6. Open the mold to obtain the storage box lid.

Preferably, in step S1, the clean room complies with the standard FDA ISO 7 or better, or complies with the standard EU level B or better.

Preferably, in step S1, the Primer comprising a Primer A and a Primer B, comprising a Primer A are 100% by weight, the following components by weight:

| | |
|---|---|
| Butyl acetate | 97%, |
| Triethoxyvinylsilane | 3%; |

comprising a Primer B are 100% by weight, the following components by weight:

| | |
|---|---|
| Butyl acetate | 95%, |
| Tetraethoxysilane | 5%. |

Preferably, the mixing mass ratio of Primer A and Primer B is 1:1-1.03:1, more preferably 1:1-1.02:1. The higher the percentage of Primer A used, the faster the curing lead time (ie, the less time spent in step S2).

Since the thickness required to prepare the flexible thin film is less than 1mm, the material setup in this specification is necessary for the production of silicon film for this product. Otherwise, it will have the problem of under-injection in the mold, or the liquid silicone cures prematurely, thus resulting in the silicone film not being fully fabricated in the mold.

The two-component platinum contented liquid silicone with a specific ratio used in the present invention is used to prepare a flexible thin film, which will enhance the vulcanization benefit, and ultimately lead to the reduction of VOM (Volatile Organic Matter) in the product, thus more in line with FDA and international requirements for food-grade applications.

After the general grades of silicone raw materials are formed, they must undergo a high-temperature process of secondary vulcanization (such as baking in a high-temperature oven at 200°C for 4 hours) to strengthen the silicone and release volatile organic substances to meet FDA and international VOM (Volatile Organic Matter) requirements. The two-component platinum contented liquid silicone with a specific raw material ratio adopted in the present invention is a low-VOM liquid silicone, which does not require a high-temperature procedure of secondary vulcanization after being encapsulated with the nylon outer ring.

Moreover, in the previous research of the inventor, it was found that if the existing general brand of silicone is used for the preparation of the flexible thin film of the present invention, the physical properties of the encapsulated nylon will be affected under high temperature baking, so there will be risk of shape change, discoloration, destruction, or release of harmful substances. However, the present invention adopts two-component platinum contented liquid silicone with special raw material ratio, which does not need to undergo high temperature conditions of secondary vulcanization, and fundamentally avoids and solves the chemical risk problem caused by nylon at high temperature.

Preferably, the method for forming the flexible thin film in step S5 may adopt overmold or double injection.

Preferably, the thickness of the flexible thin film is less than or equal to 1 mm, the hardness is Shore A30, and the tensile limit is 5cm. Since the thickness of the flexible thin film can be less than or equal to 1 mm, the light transmittance can be improved so that the user can clearly see the food inside. Light transmittance rate is 80% or better.

Preferably, the plastic rigid frame is prepared from polyurethane resin. More preferably, it is a plastic rigid frame produced from PA66 (Polyamide 66) or PA6 (Polyamide 6) or PP (Polypropylene). The plastic rigid frame is prepared by adopting the method of injection or double injection.

In the third aspect, the present invention further provides a storage box lid, characterized by comprising a flexible thin film and a plastic rigid frame, the outer periphery of the flexible thin film and the inner periphery of the plastic rigid frame being connected with a primer,
wherein the storage box lid further comprises clips, the clips are movably connected with the outer periphery of the plastic rigid frame, the number of the clips is more than 2, and the clips are used for realizing fixed connection between the storage box lid and a matching box body;
a groove is provided in the lower portion of the plastic rigid frame, the groove is provided in the circumferential direction of the plastic rigid frame, and a sealing ring which is configured to realize sealing between the storage box lid and the matching box body is placed in the groove.

Preferably, the clips are connected with the plastic rigid frame through pivot shafts, and the clips can rotate in the rotation direction of the pivot shafts.

In the fourth aspect, the present invention further provides a storage box comprising the above-mentioned storage box lid and a box body, wherein the storage box lid is provided above the box body, a convex extending horizontally outward is provided on the box body, and the fixed connection between the box body and the storage box lid is realized by fitting connection of the clips and the convex.

Preferably, the box body is anyone selected from the group of a glass box body, a plastic box body and a ceramic box body.

Compared to the prior art, the invention has the following beneficial effects:
1. The present invention adopts the two-component platinum contented liquid silicone composed of specific raw materials to prepare a flexible film on the lid of the storage box, which has very good physical properties compared to the existing organic silica gel. The obtained flexible film has a tensile strength of 10.0-13.0 Mpa, an elongation at break of 900-1100%, a tear strength of 20-25 KN/M, and a compression deformation rate of only 20-25%.
2. The storage box lid manufactured according to the present invention has an elastic and soft flexible thin film surface, and has a plastic rigid outer frame to maintain the shape of the flexible thin film, the flexible thin film and the plastic rigid outer frame are connected by a primer, so that they are permanently bonded into an integral structure, and the adhesion fastness is high.
3. In the present invention, the storage box formed by using the storage box lid with the flexible thin film in combination with a matching box body can significantly improve the capacity for storing food, so that it can effectively store food larger than the box body. Moreover, the storage box of the present invention does not significantly squeeze the stored food, and the effect is distinctive compared to the prior art storage boxes.
4. The storage box of the present invention not only can effectively seal food, but also reduces the proportion (%) of the air stored inside after its flexible thin film is stretched when storing food, thereby effectively reducing the food oxidation and spoilage caused by the air inside the storage box body, and extending the fresh-keeping of the stored food.

### BRIEF DESCRIPTION OF THE DRAWINGS

In order to explain the embodiments of the present application more clearly, the related drawings will be briefly described below. It will be understood that the drawings in the following description are only intended to illustrate some embodiments of the present application, and many other technical features, connection relationships, etc. not mentioned herein may be obtained by those of ordinary skill in the art from these drawings.
Fig. 1 is a structural schematic view of a storage box provided by the present application.
Fig. 2 is a horizontal view of a storage box, with silicone film being extended by interior content, provided by the present application.

The reference numerals and names in the appended drawing are as follows:
1 flexible thin film;
2 clip;
3 plastic rigid frame;
4 silicone rubber sealing ring;
5 box body;
6 primer.

### DETAILED DESCRIPTION OF EMBODIMENTS

The present invention is described in detail below in conjunction with specific embodiments. The following embodiments will facilitate a further understanding of the present invention by those skilled in the art without limiting the present invention in any form. It should be noted that for those skilled in the art, several modifications and improvements can be made without departing from the concept of the present invention. All these belong to the scope of protection of the present invention.

### Embodiment 1

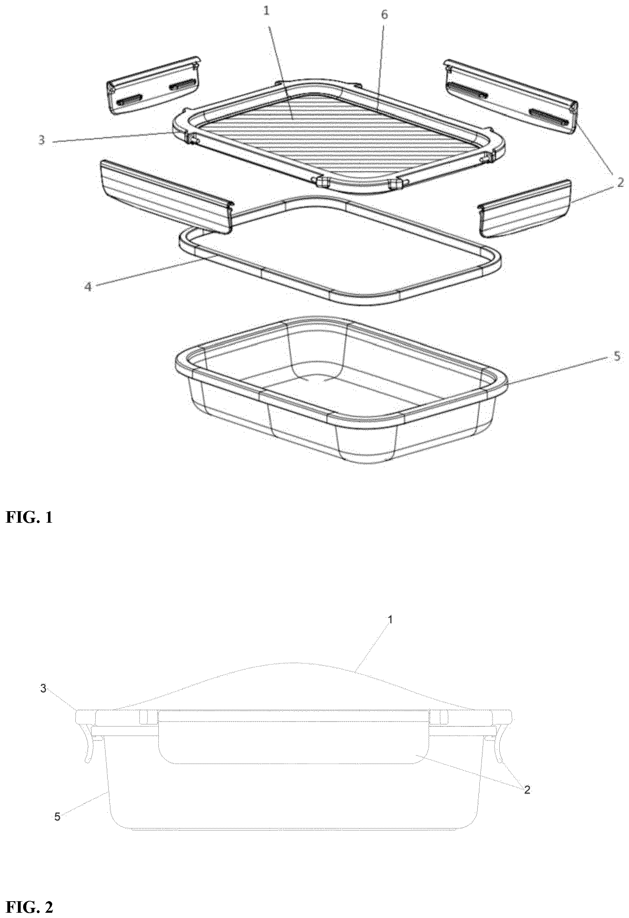

The embodiment provides a storage box lid, and as shown in FIG. 1, the storage box lid comprises a flexible thin film 1 and a plastic rigid frame 3, the outer periphery of the flexible thin film 1 and the inner periphery of the plastic rigid frame 3 are connected with a primer 6.

The outer periphery of the plastic rigid frame 3 is connected with clips 2 through pivot shafts, and the clips 2 are able to rotate in the rotation direction of the pivot shafts. In this embodiment, the plastic rigid frame 3 is square, 4 clips 2 are adopted and are symmetrically provided at four sides of the plastic rigid frame 3, and the clips 2 are used for realizing fixed connection between the storage box lid and a matching box body 5. Food in the box body can be effectively sealed and preserved though the tight fitting of the clips 2 and the box body 5.

A groove is provided in the lower portion of the plastic rigid frame 3, the groove is provided in the circumferential direction of the plastic rigid frame 3, and a silicone rubber sealing ring 4 which is configured to realize further sealing between the storage box lid and the matching box body 5 and able to withstand high temperature (which up to 220°C) is placed in the groove.

The plastic rigid frame 3 and the clips 2 in this embodiment are all manufactured from polyamide resin.

The preparation method of the storage box lid in the present embodiment comprises the following steps:
S1. Transfer the primer to the plastic rigid frame at room temperature in a clean room;
The primer comprising a Primer A and a Primer B, comprising a Primer A are 100% by weight, the following components by weight show in Table 1; comprising a Primer B are 100% by weight, the following components by weight shown in Table 1.

| | Raw material composition | CAS NO. | Percentage | Usage Ratio |
|---|---|---|---|---|
| Primer A | Butyl acetate | 123-86-4 | 97% | 1.03 |
| | Triethoxyvinylsilane | 78-08-0 | 3% | |
| Primer B | Butyl acetate | 123-86-4 | 95% | 1 |
| | Tetraethoxysilane | 78-10-4 | 5% | |

S2. Curing the primer at a temperature of 120°C for 20 minutes;
S3. Heating the mold to 125 ° C;
S4. Put the plastic rigid frame with primer into the mold cavity and position it, and then close the mold;
S5. Inject two-component platinum contented liquid silicone into the mold cavity, cure for 150s, and form a flexible thin film in the plastic rigid frame; the two-component platinum contented liquid silicone is formed by component A and component B in a certain proportion (shown in Table 2) ;
S6. Open the mold to obtain the storage box lid.

The embodiment further provides a storage box comprising the above-mentioned lid and a box body as shown in FIG.1 and FIG.2, wherein the lid is provided above the box body, a convex extending horizontally outward is provided on the box body and extending in the direction of the bottom of the box body, and the fixed connection between the box body and the lid is realized by fitting connection of the clips and the convex. Although the box body described in this embodiment is a plastic box body, the present invention is not limited thereto, the same effect can be achieved by replacing it with a glass box body, a ceramic box body, etc.

The storage box prepared in this embodiment can place and store foods with irregular shapes. The thickness of the flexible thin film prepared by using two-component platinum contented liquid silicone is less than 1 mm, the hardness is Shore A30, and the tensile limit is 5 cm; the tensile strength of the flexible thin film is 11 MPa, so that when irregular food is placed in the storage box, its ability to withstand pressure to stretch can be effectively extended up to twice; the elongation at break of the flexible thin film is 1050%, so that it can also provide a large amount of stretching without breaking under the condition of force stretching, thereby increasing the plasticity of the storage box; the tear strength of the flexible thin film reaches 23 KN/M, so that even if it encounters sharp food for storage, such as bones, chicken wings, etc., it will not be easily pierced like conventional films, but because of its high tear strength, even if it encounters the above There is no puncture and tear in sharp food; the compression set ratio of this flexible thin film is low, in the test JIS K6249, when it reaches 175 degrees and compresses for 22 hours, its deformation ratio remained at 21%.

### Embodiment 2-3

Embodiment 2-3 provides a method for preparing a storage box lid, which is basically the same as the method in Embodiment 1, with the only difference that: Embodiment 2-3 prepares the raw material of the two-component platinum contented liquid silicone for the flexible thin film The composition is shown in Table 2.

**Table 2**

| | Raw material composition | CAS NO. | Embodiment 1 | Embodiment 2 | Embodiment 3 | Usage Ratio |
|---|---|---|---|---|---|---|
| Liquid Silicone A | Vinyl Terminated Polydimethylsiloxane | 68083-19-2 | 60% | 70% | 78% | 1.05 |
| | Silicone Dioxide | 14464-46-1 | 38% | 27% | 18% | |
| | Platinum(0)-1,3 -divinyl-1,1,3,3 -tetramethyldisiloxane | 68478-92-2 | 2% | 3% | 4% | |
| Liquid Silicone B | Vinyl Terminated Polydimethylsiloxane | 68083-19-2 | 60% | 70% | 78% | 1 |
| | Silicone Dioxide | 14464-46-1 | 38% | 27% | 18% | |
| | Dimethyhydrogensiloxane | 68037-59-2 | 2% | 3% | 4% | |

### Embodiment 4

The present embodiment provides a method for preparing a storage box lid, comprising the following steps:
The preparation method of the storage box lid in the present embodiment comprises the following steps:
S1. Transfer the primer to the plastic rigid frame at room temperature in a clean room; The primer is the same as in Embodiment 1.
S2. Curing the primer at a temperature of 140 °C for 18 minutes;
S3. Heating the mold to 135°C;
S4. Put the plastic rigid frame with primer into the mold cavity and position it, and then close the mold;
S5. Inject two-component platinum contented liquid silicone into the mold cavity, cure for 180s, and form a flexible thin film in the plastic rigid frame; the two-component platinum contented liquid silicone is formed by mixing component A and component B in a ratio of 1:1; The two-component platinum contented liquid silicone includes the components shown in Embodiment 1 in Table 1 below.
S6. Open the mold to obtain the storage box lid.

### Embodiment 5

The present embodiment provides a method for preparing a storage box lid, comprising the following steps:
The preparation method of the storage box lid in the present embodiment comprises the following steps:
S1. Transfer the primer to the plastic rigid frame at room temperature in a clean room; The primer is the same as in Embodiment 1.
S2. Curing the primer at a temperature of 150 °C for 15 minutes;
S3. Heating the mold to 145°C;
S4. Put the plastic rigid frame with primer into the mold cavity and position it, and then close the mold;
S5. Inject two-component platinum contented liquid silicone into the mold cavity, cure for 200s, and form a flexible thin film in the plastic rigid frame; the two-component platinum contented liquid silicone is formed by mixing component A and component B in a ratio of 1:1.08; The two-component platinum contented liquid silicone includes the components shown in Embodiment 1 in Table 1 below.
S6. Open the mold to obtain the storage box lid.

The present invention further compares the performance of the flexible thin film prepared by using the two-component platinum contented liquid silicone described in the embodiment of the present invention and the flexible thin film prepared by the existing general grade silicone produced by other brands. The results are shown in Table 3.

**Table 3**

| Physical Properties Comparison Table | | |
|---|---|---|
| Physical Properties | The two-component platinum contented liquid silicone used in the present invention | Other brands of silicone |
| Tensile Strength | 10.0-13.0 Mpa | 5.5 - 8.0 Mpa |
| Elongation at break | 900 - 1100% | 150%-700% |
| Tear Strength | 20-25 KN/M | 10-15Kn/M |
| Compression Deformation Rate | 20-25% | 30% and above |

It will be apparent to those skilled in the art that the present application is not limited to the details of the above exemplary embodiments and that the present application can be embodied in other specific forms without departing from the spirit or essential features of the present application. Thus, the embodiments are to be regarded as exemplary and non-limiting from any point of view, and the scope of the present application is defined by the appended claims rather than the above description, so that all variations falling within the meaning and scope of the equivalent requirements of the claims are intended to be included in the present application. No reference numerals in the claims shall be construed as limiting the claims to which they relate.

## Claims

1. A two-component platinum contented liquid silicone for preparing a storage box lid, **characterized in that**: comprising a component A and a component B, the content of component A are 100% by weight, the following components by weight:
| | |
|---|---|
| Vinyl Terminated Polydimethylsiloxane | 60-78%, |
| Silicone Dioxide | 18-38%, |
| Platinum(0)-1,3-divinyl-1,1,3,3-tetramethyldisiloxane | 2-4%; |
the content of component B are 100% by weight, the following components by weight:
| | |
|---|---|
| Vinyl Terminated Polydimethylsiloxane | 60-78%, |
| Silicone Dioxide | 18-38%, |
| Dimethyhydrogensiloxane | 2-4%. |

2. The two-component platinum contented liquid silicone for preparing a storage box lid according to claim 1, **characterized in that**: the mass ratio of the component A and the component B is 1:1 to 1.08:1.

3. A preparation method of a storage box lid, **characterized in that**: the storage box lid comprises a flexible thin film and a plastic rigid frame, and the flexible thin film is prepared from the two-component platinum contented liquid silicone described in any one of claims 1-3, The preparation method of the storage box lid comprises the following steps:
S1. Transfer the Primer to the plastic rigid frame at room temperature in a clean room;
S2. Curing the Primer at a temperature of 120°C to 150°C for 15 minutes to 20 minutes;
S3. Heating the mold to 125-145 ° C;
S4. Put the plastic rigid frame with Primer transferred into the mold cavity and position it, and then close the mold;
S5. Inject two-component platinum contented liquid silicone into the mold cavity, cure for 150s to 200s, and form a flexible thin film in the plastic rigid frame; the two-component platinum contented liquid silicone is formed by mixing component A and component B in a certain proportion;
S6.Open the mold to obtain the storage box lid.

4. The method for preparing a storage box lid of claim 3, **characterized in that**: in step S1, the clean room complies with the standard FDA ISO 7 or better, or complies with the standard EU level B or better.

5. The method for preparing a storage box lid of claim 4, **characterized in that**: in step S1, the Primer comprising a Primer A and a Primer B, comprising a Primer A are 100% by weight, the following components by weight:
| | |
|---|---|
| Butyl acetate | 97%, |
| Triethoxyvinylsilane | 3%; |
comprising a Primer B are 100% by weight, the following components by weight:
| | |
|---|---|
| Butyl acetate | 95%, |
| Tetraethoxysilane | 5%. |

6. The method for preparing a storage box lid of claim 5, **characterized in that**: the mixing mass ratio of Primer A and Primer B is 1:1-1.03:1, more preferably 1.0:1-1.02:1.

7. A storage box lid prepared by any one of claims 4-6, **characterized by** comprising a flexible thin film and a plastic rigid frame, the outer periphery of the flexible thin film and the inner periphery of the plastic rigid frame being connected with a primer,
wherein the storage box lid further comprises clips, the clips are movably connected with the outer periphery of the plastic rigid frame, the number of the clips is more than 2, and the clips are used for realizing fixed connection between the storage box lid and a matching box body;
a groove is provided in the lower portion of the plastic rigid frame, the groove is provided in the circumferential direction of the plastic rigid frame, and a sealing ring which is configured to realize sealing between the storage box lid and the matching box body is placed in the groove.

8. The storage box lid of Claim 7, **characterized in that** the clips are connected with the plastic rigid frame through pivot shafts, and the clips can rotate in the rotation direction of the pivot shafts.

9. A storage box lid **characterized by** comprising the storage box lid of Claim 7 and a box body, wherein the storage box lid is provided above the box body, a convex extending horizontally outward is provided on the box body, and the fixed connection between the box body and the storage box lid is realized by fitting connection of the clips and the convex.

10. The storage box of Claim 9, **characterized in that** the box body is any one of a glass box body, a plastic box body and a ceramic box body.
